# EUROPEAN PATENT SPECIFICATION

(11) **EP 3 553 340 B1**
(45) Date of publication and mention of the grant of the patent: **03.07.2024**
(21) Application number: 17877827.0
(22) Date of filing: 06.11.2017
(51) Int. Cl.: F16F 13/10

(54) **VIBRATION-PROOF DEVICE**
VIBRATIONSFESTE VORRICHTUNG
DISPOSITIF RÉSISTANT AUX VIBRATIONS

(30) Priority: 07.12.2016 JP 2016237439
(43) Date of publication of application: 16.10.2019
(73) Proprietor: Prospira Corporation, Kanagawa prefecture 212-0013 (JP)
(72) Inventor: NISHIKAWA, Keita, Tokyo 104-8340 (JP)
(74) Representative: Marks & Clerk LLP
(86) International application number: PCT/JP2017/039882
(87) International publication number: WO 2018/105286

(56) References cited:
- JP-A- 2008 241 047
- JP-A- 2010 084 822
- JP-A- 2010 084 822
- JP-A- 2013 036 513
- JP-A- 2013 036 513

## Description

### [Technical Field]

The present invention relates to a vibration-proof device applied to, for example, automobiles, industrial machinery and the like to absorb and damp vibration of vibration-generating parts of an engine or the like.

Priority is claimed on Japanese Patent Application No. 2016-237439, filed December 7, 2016.

### [Background Art]

Regarding a vibration-proof device of this type, for example, a configuration described in Patent Document 1 to be described below is known. This vibration-proof device has a tubular first attaching member connected to one of a vibration generating part and a vibration-receiving part, a second attaching member connected to the other thereof, an elastic body which connects the two attaching members, a partition member which partitions a liquid chamber in the first attaching member in which a liquid is sealed into a main liquid chamber having the elastic body as a part of a wall surface and an auxiliary liquid chamber, and a movable member accommodated in an accommodation chamber provided in the partition member so as to be deformable or displaceable in an axial direction of the first attaching member. The partition member is provided with a plurality of communication holes through which the accommodation chamber individually communicates with the main liquid chamber and the auxiliary liquid chamber. Attention is also drawn to the disclosure of JP2013-036513A.

### [Citation List]

### [Patent Document]

[Patent Document 1]
Japanese Unexamined Patent Application, First Publication No. 2016-3716

### [Summary of Invention]

### [Technical Problem]

In the aforementioned vibration-proof device of related art, when the liquid pressure in the main liquid chamber fluctuates on the basis of an input from the vibration generation part, the movable member is displaced or deformed in an axial direction and made to abut the wall surface of the accommodation chamber, but for example, there may be a problem of occurrence of abnormal noise due to vibration or the like of the partition member.

### [Solution to Problem]

The present invention has been made in view of the aforementioned circumstances, and an object of the present invention is to limit abnormal noise caused by the movable member abutting the wall surface of the accommodation chamber when vibration is input from the vibration generation part.

A vibration-proof device of the present invention includes a tubular first attaching member connected to one of a vibration generation part and a vibration-receiving part, and a second attaching member connected to the other thereof; an elastic body configured to connect both the attaching members to each other; a partition member configured to divide a liquid chamber in the first attaching member in which liquid is sealed into a main liquid chamber having the elastic body as a part of a wall surface, and an auxiliary liquid chamber; and a movable member accommodated in an accommodation chamber provided in the partition member so as to be deformable or displaceable in an axial direction of the first attaching member. The partition member is provided with a plurality of communication holes through which the accommodation chamber individually communicates with the main liquid chamber and the auxiliary liquid chamber. An inclined protrusion part protruding in a direction inclined with respect to both the axial direction and a radial direction along a central axis of the first attaching member is formed on at least an outer circumferential edge portion of the movable member. A width in the radial direction of a base part of the inclined protrusion part is smaller than a length in the axial direction from the root part to a distal end portion of the inclined protrusion part. A straight protrusion part protruding in the axial direction is formed in a portion of the movable member located on an inner side in the radial direction of the inclined protrusion part.

### [Effects of Invention]

According to the present invention, it is possible to limit abnormal noise caused by abutment of the movable member on the wall surface of the accommodation chamber when vibration is input from the vibration generation part.

### [Brief Description of Drawings]

Fig. 1 is a longitudinal sectional view of a vibration-proof device according to an embodiment of the present invention.
Fig. 2 is a half longitudinal sectional view of a movable member constituting the vibration-proof device shown in Fig. 1.
Fig. 3 is a half longitudinal sectional view showing another form of the movable member shown in Fig. 2.
Fig. 4 is a half longitudinal sectional view showing another form of the movable member shown in Fig. 3.

### [Description of Embodiment]

Next, an embodiment of the present invention will be described with reference to the drawings.

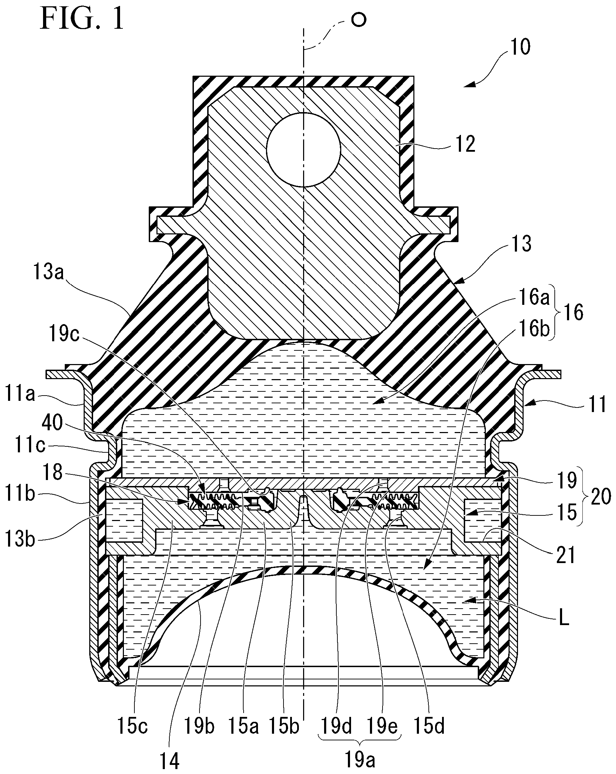

As shown in Fig. 1, a vibration-proof device 10 includes a tubular first attaching member 11 connected to one of a vibration generation part and a vibration reception part, a second attaching member 12 connected to the other thereof, an elastic body 13 which elastically connects the first attaching member 11 and the second attaching member 12, and a partition member 20 which is disposed inside the first attaching member 11 and partitions a liquid chamber 16 formed inside the first attaching member 11 into a main liquid chamber 16a in which the elastic body 13 is used as part of the wall surface and an auxiliary liquid chamber 16b.

Further, the respective members are provided coaxially with a central axis O of the first attaching member 11. Hereinafter, a direction along the central axis O is referred to as an axial direction. Along the axial direction, a side of the first attaching member 11 is referred to as a lower side and a side of the second attaching member 12 is referred to as an upper side. Further, a direction orthogonal to the central axis O in a plan view as viewed from the axial direction is referred to as a radial direction, and a direction around the central axis O is referred to as a circumferential direction.

Here, the aforementioned liquid chamber 16 is partitioned by the partition member 20 into an upper main liquid chamber 16a and a lower auxiliary liquid chamber 16b.

Further, for example, a liquid L such as ethylene glycol, water and silicone oil is sealed into the main liquid chamber 16a and the auxiliary liquid chamber 16b.

The vibration-proof device 10 is mounted on, for example, an automobile or the like, and reduces transmission of vibration of the engine to a vehicle body. In the vibration-proof device 10, the second attaching member 12 is connected to an engine (not shown) as a vibration generation part, while the first attaching member 11 is connected to a vehicle body as a vibration reception part via a bracket (not shown).

The first attaching member 11 includes a first tubular part 11a formed on the upper side, a second tubular part 11b formed on the side below the first tubular part 11a, and a stepped part 11c which connects the first tubular part 11a to the second tubular part 11b. The first tubular part 11a, the second tubular part 11b, and the stepped part 11c are disposed coaxially with the central axis O and integrally formed. When the upper end portion of the first attaching member 11 is closed in a liquid-tight state by the elastic body 13 and the lower end portion of the first attaching member 11 is closed in a liquid-tight state by a diaphragm 14, the liquid L can be sealed inside the first attaching member 11.

The second attaching member 12 is disposed above the first tubular part 11a of the first attaching member 11.

The elastic body 13 is a member made of, for example, a rubber material or the like. The elastic body 13 has a truncated conical deformed part 13a that protrudes upward from the upper end portion of the first attaching member 11 and gradually decreases in diameter toward the upper side, and a covering part 13b extending downward along an inner circumferential surface of the first attaching member 11 from the deformed part 13a.

The covering part 13b is vulcanization-bonded to the inner circumferential surface of the first attaching member 11, and the inner circumferential surface of the first attaching member 11 is covered with the elastic body 13 over its entire area. The deformed part 13a and the covering part 13b are integrally formed.

As shown in Fig. 1, the above-mentioned partition member 20 is formed by a disk-shaped upper member 19 in which front and back surfaces are directed in the axial direction, and a lower member 15 disposed on the side below the upper member 19. The upper member 19 and the lower member 15 are made of, for example, an aluminum alloy, resin, or the like. The rigidity of the upper member 19 and the lower member 15 is set to such a degree that these members do not deform when a dynamic pressure of the liquid L acts on these members on the basis of the input vibration from the vibration generation part.

The partition member 20 is formed in a disk shape as a whole and is fitted to the inside of the first attaching member 11 (inside of the covering part 13b). The upper surface of the upper member 19 faces the main liquid chamber 16a, and the upper member 19 forms a part of the partition wall of the main liquid chamber 16a. The lower surface of the lower member 15 faces the auxiliary liquid chamber 16b, and the lower member 15 forms a part of the partition wall of the auxiliary liquid chamber 16b.

The upper member 19 includes a plurality of first communication holes 19a penetrating the upper member 19 in a vertical direction, a fixing part 19b protruding downward on the side radially inward from the first communication holes 19a, and a recessed part 19c recessed upward on the radially inner side of the fixing part 19b.

The lower member 15 includes an annular flange part 15a, an inner tubular part 15b extending upward from the inner circumferential edge portion of the flange part 15a, an outer tubular part 15c extending upward from the outer circumferential edge portion of the flange part 15a, and a restriction path 21 formed on the side radially outward from the outer tubular part 15c. An accommodation chamber 18 of the partition member 20 is defined by the upper surface of the flange part 15a, the outer circumferential surface of the inner tubular part 15b, the inner circumferential surface of the outer tubular part 15c, and the lower surface of the upper member 19. The accommodation chamber 18 and the restriction path 21 are independent of each other.

The restriction path 21 allows the main liquid chamber 16a and the auxiliary liquid chamber 16b to communicate with each other. The restriction path 21 extends along the circumferential direction on the outer circumferential surface of the lower member 15 of the partition member 20 and is disposed to avoid the accommodation chamber 18. The restriction path 21 may be tuned so that resonance (liquid column resonance) occurs when shake vibrations, for example, having a frequency of around 10 Hz are input to the vibration-proof device 10.

The partition member 20 is further provided with a first communication hole 19a and a second communication hole 15d. The first communication hole 19a and the second communication hole 15d extend outward in the axial direction from a portion of the wall surface of the accommodation chamber 18 facing a movable member 40 to be described later in the axial direction, and allow the accommodation chamber 18, the main liquid chamber 16a or the auxiliary liquid chamber 16b to individually communicate with each other. The first communication hole 19a allows the accommodation chamber 18 and the main liquid chamber 16a to communicate with each other, and the second communication hole 15d allows the accommodation chamber 18 and the auxiliary liquid chamber 16b to communicate with each other.

The plurality of first communication holes 19a are formed in the upper member 19. The plurality of second communication holes 15d are formed in the lower member 15.

A cross-sectional area in the cross section orthogonal to the axial direction of each first communication hole 19a varies along the axial direction. On the inner circumferential surface of each first communication hole 19a, a straight part 19d having a constant cross-sectional area in the axial direction, and an enlarged diameter part 19e gradually expanding in diameter toward a bottom (the accommodation chamber side) are formed. The straight part 19d extends in the axial direction from an upper end opening which opens toward the main liquid chamber 16a to a central part of the first communication hole 19a. The enlarged diameter part 19e extends in the axial direction from the central part of the first communication hole 19a, which is the lower end of the straight part 19d, to a lower end opening that opens toward the accommodation chamber 18.

The cross-sectional area of the first communication hole 19a is largest at the lower end opening that opens toward the accommodation chamber 18 side.

Here, the movable member 40 (a movable plate, and a membrane) is disposed inside the accommodation chamber 18. The movable member 40 is accommodated in the accommodation chamber 18 so as to be deformable or displaceable in the axial direction. The movable member 40 is formed in a plate shape in which front and back surfaces are oriented in the axial direction of, for example, a rubber material, and is elastically deformable. The movable member 40 is deformed or displaced in the axial direction in accordance with a pressure difference between the main liquid chamber 16a and the auxiliary liquid chamber 16b.

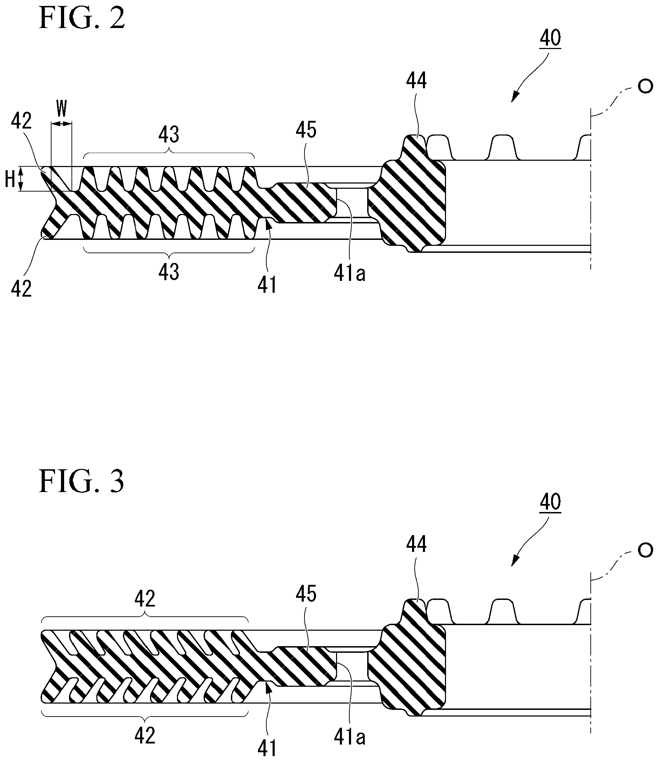

As shown in Fig. 2, the movable member 40 includes an annular main body part 41 disposed coaxially with the central axis O. The main body part 41 has an inclined protrusion part 42 protruding from the outer circumferential edge portion thereof in a direction inclined with respect to both the axial direction and a radial direction, a straight protrusion part 43 that is disposed in a portion of the main body part 41 located on the radially inner side of the inclined protrusion part 42 and protruding in the axial direction, and a plurality of penetration holes 41a penetrating the main body part 41 in the vertical direction formed therein.

A pair of inclined protrusion parts 42 is formed above and below the outer circumferential edge portion of the main body part 41 of the movable member 40. Each of the inclined protrusion parts 42 is annularly formed along the entire circumference of the outer circumferential edge portion of the main body part 41. A radial width (hereinafter referred to as a root width W) of a root part of each of the inclined protrusion parts 42 is smaller than an axial height (hereinafter referred to as a height H) from the root part to a distal end portion of each inclined protrusion part 42. Further, the root width W is a width of the inclined protrusion part 42 along the upper surface or the lower surface of the main body part 41 and on a virtual straight line extending in the radial direction. Further, the height H is a length in the axial direction from the imaginary straight line to the distal end portion of the inclined protrusion part 42.

A plurality of straight protrusion parts 43 are formed on the upper surface and the lower surface of the main body part 41. Each of the straight protrusion parts 43 is formed in an annular shape coaxial with the central axis O. The width of each straight protrusion part 43 in the radial direction gradually decreases toward the distal end. Each of the straight protrusion parts 43 is formed on the outer circumferential edge portion of the main body part 41 and are continuous with the outer circumferential edge portion in which the inclined protrusion parts 42 are formed. The positions in the axial direction of the distal end portions of the inclined protrusion parts 42 and each straight protrusion part 43 formed on the upper side of the main body part 41 are the same as each other. Likewise, the positions in the axial direction of the distal end portions of the inclined protrusion parts 42 and each straight protrusion part 43 formed on the lower side of the main body part 41 are equal to each other. As a result, a relatively small gap which is uniform in the axial direction is formed between the inclined protrusion parts 42 and the straight protrusion parts 43 and the wall surface of the accommodation chamber 18.

Further, the inclined protrusion parts 42 and the straight protrusion parts 43 may be discontinuous in the circumferential direction, and in this case, it possible to reduce the rigidity of the entire movable member 40 and make it easier to deform.

The movable member 40 further includes an inner fixed part 44 (a fixed part) protruding upward and downward from the inner circumferential edge portion of the main body part 41, and an outer fixed part 45 (a fixed part) protruding upward and downward from a portion of the main body part 41 between the inner fixed part 44 and the straight protrusion part 43. The inner fixed part 44 and the outer fixed part 45 are formed in an annular shape coaxial with the central axis O. A thickness in the axial direction of the inner fixed part 44 is greater than a thickness in the axial direction of the outer fixed part 45. Each of the two fixed parts 44 and 45 is formed in a portion of the main body part 41 positioned on the radially inner side of the outer circumferential edge portion, and is sandwiched by the upper member 19 and the lower member 15 in the vertical direction, thereby being fixed to the partition member 20. As a result, since the movable member 40 is deformed using the fixed parts 44 and 45 as fixing ends, the portion of the movable member 40 that is radially distant from the fixed parts 44 and 45 tends to be displaced and accelerated in the axial direction.

In addition, in the longitudinal sectional view, a volume of the inclined protrusion part 42 may be formed to be smaller than a volume of the straight protrusion part 43. In this case, by reducing the mass of the inclined protrusion part 42, which is formed at the outer circumferential edge portion of the main body part 41 and thus easily accelerates, it is possible to minimize the impact when the inclined protrusion part 42 abuts the wall surface of the accommodation chamber 18.

As described above, according to the vibration-proof device 10 of the present embodiment, when vibration is input to the vibration-proof device 10 and the pressure of the liquid L in the main liquid chamber 16a varies, the movable member 40 deforms or displaces inside the accommodation chamber 18 in the axial direction. Specifically, the movable member 40 elastically deforms such that the outer circumferential edge portion is displaced most in the axial direction using the fixed parts 44 and 45 as fixing ends. At this time, the distal end portions of the respective inclined protrusion parts 42 formed on the outer circumferential edge portion of the movable member 40 abut on the upper and lower wall surfaces of the accommodation chamber 18, and the respective inclined protrusion parts 42 fall down from the root part to shear and deform to approach form a horizontal attitude. Therefore, for example, as compared with a case in which the movable member 40 is compressively deformed to absorb the vibrational energy, the amount of deformation of the movable member 40 and the time required for the deformation increase, and an abrupt rise in a reaction force due to the deformation of the movable member 40 is prevented, and the cushioning effect due to the deformation of the movable member 40 can be enhanced.

In addition, since the root width W of the inclined protrusion part 42 is smaller than the height H, for example, as compared with a case in which the root width W is larger than the height H, the amount of displacement of the inclined protrusion part 42 until the inclined protrusion part 42 falls to a horizontal attitude increases. By increasing the amount of displacement of the inclined protrusion part 42 in this manner, by lengthening the time required until the deformation of the inclined protrusion part 42 is completed, it is possible to reduce the acceleration of the inclined protrusion part 42 when the inclined protrusion part 42 abuts the wall surface of the accommodation chamber 18 and to absorb and damp the vibration transmitted from the movable member 40 to the partition member 20.

As described above, when the movable member 40 abuts the wall surface of the accommodation chamber 18, it is difficult for the vibration-proof device 10 to vibrate, and the occurrence of abnormal noise can be prevented.

Further, since the movable member 40 has a plurality of straight protrusion parts 43 in addition to the inclined protrusion parts 42, when the vibration is input to the vibration-proof device 10, the inclined protrusion part 42 and the plurality of straight protrusion parts 43 abut on the wall surface of the accommodation chamber 18 as a whole. Thus, is possible to limit the occurrence of abnormal noise and degradation of the durability of the movable member 40 due to an occurrence of a locally large reaction force on the movable member 40.

In addition, since the straight protrusion part 43 is formed on the inner side in the radial direction of the movable member 40, for example, as compared with a case in which the inclined protrusion part 42 is formed on the inner side in the radial direction, it is easier to release a molding die when the movable member 40 is molded by the molding die and the movable member 40 can be easily molded.

Further, since the positions in the axial direction of the distal end portion of the inclined protrusion part 42 and the distal end portions of the plurality of straight protrusion parts 43 are equal to each other, the gap between the inclined protrusion part 42, the straight protrusion part 43 and the wall surface of the accommodation chamber 18 can be made uniform. Thus, the distal end portion of the inclined protrusion part 42 and the distal end portion of the straight protrusion part 43 may readily be made to abut the wall surface of the accommodation chamber 18 uniformly, and it is possible to more reliably limit the occurrence of abnormal noise and degradation of the durability of the movable member 40 due to the occurrence of locally large reaction force on the movable member 40.

In addition, since the gap between the inclined protrusion part 42, the straight projection part 43 and the wall surface of the accommodation chamber 18 is uniformly reduced, it is difficult for the movable member 40 accelerate in the accommodation chamber 18, and it is possible to more reliably limit the occurrence of abnormal noise by reducing the speed at which the inclined protrusion part 42 and the straight protrusion part 43 abut on the wall surface of the accommodation chamber 18.

Further, since the fixed parts 44 and 45 of the movable member 40 are fixed to the partition member 20 on the inner side in the radial direction, by causing the inclined protrusion part 42 formed on the outer circumferential edge portion of the movable member 40 to reliably abut on the wall surface of the accommodation chamber 18, it is possible to more reliably achieve the improvement of the cushioning effect due to shear deformation of the inclined protrusion part 42 and absorb the vibrational energy.

Further, when vibration having a relatively large amplitude acts on the vibration-proof device 10 and the pressure of the liquid L in the main liquid chamber 16a fluctuates, since the liquid L flows between the main liquid chamber 16a and the auxiliary liquid chamber 16b through the restriction path 21, and a liquid column resonance occurs, the vibration can be absorbed and damped.

The technical scope of the present invention is not limited to the above embodiment, and various modifications can be made without departing from the scope of the present invention defined in the claims.

For example, in the above-described embodiment, the distal end portions of the inclined protrusion part 42 and the distal end portions of the plurality of straight protrusion parts 43 are formed to have the same position in the axial direction. However, the present invention is not limited thereto, and the movable member 40 in which the positions of the distal end portions of each protrusion part in the axial direction are not uniform may be adopted. For example, as the positions at which each of the protrusion parts 42 and 43 is formed are away from the fixed parts 44 and 45 in the radial direction, the height H of each of protrusion parts 42 and 43 may gradually decrease. In this case, since the amount of displacement in the axial direction becomes larger in portions of the movable member 40 further away from the fixed parts 44 and 45 in the radial direction, it is possible to cause the distal end portions of the respective protrusion parts 42 and 43 to more uniformly abut on the wall surface of the accommodation chamber 18.

Further, in the above-described embodiment, the fixed parts 44 and 45 of the movable member 40 are fixed to the partition member 20, but the movable member 40 may not be fixed to the partition member 20. In this case, along with the input of vibration to the vibration-proof device 10, the entire movable member 40 can be elastically deformed while being displaced in the axial direction.

Further, in the above-described embodiment, the case in which the second attaching member 12 and the engine are connected and the first attaching member 11 and the vehicle body are connected has been described. However, the present invention is not limited thereto, and may be configured by being connected in reverse, or the vibration-proof device 10 may be provided in another vibration generation part and the vibration reception part.

Further, in a form which is not according to the present invention, in place of the movable member 40 shown in the above embodiment, for example, the movable member 40 shown in Fig. 3 may be used. In the movable member 40 shown in Fig. 3, a plurality of inclined protrusion parts 42 are formed in a radially inner portion of the outer circumferential edge portion of the main body part 41. In this way, when the vibration is input to the vibration-proof device 10, the plurality of inclined protrusion parts 42 as a whole abuts the wall surface of the accommodation chamber 18 and is sheared and deformed. As a result, the proportion of the portion of the movable member 40 that absorbs vibration energy due to the shear deformation increases, and the cushioning effect due to deformation of the movable member 40 can be further enhanced.

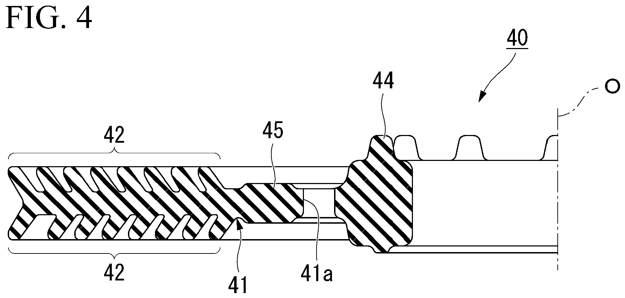

Further, in a form which is not according to the present invention, in place of the movable member 40 shown in Fig. 3, for example, the movable member 40 shown in Fig. 4 may be used. In the movable member 40 shown in Fig. 3, the respective inclined protrusion parts 42 are formed at symmetrical positions in the vertical direction. However, in the movable member 40 shown in Fig. 4, the positions at which the inclined protrusion parts 42 are formed are vertically asymmetric. Specifically, the inclined protrusion part 42 formed on the lower side of the main body part 41, among the inclined protrusion parts 42 formed on the radially inner side of the outer circumferential edge portion of the main body part 41, is formed between the two inclined protrusion parts 42 formed at positions adjacent to each other in the radial direction on the upper side of the main body part 41. In this way, by disposing the inclined protrusion parts 42 on the upper side and the lower side of the main body part 41 in a staggered manner, it is possible to adjust the deformation mode and easiness of deformation of the entire movable member 40.

In addition, it is possible to appropriately replace the constituent elements in the above-described embodiment with well-known constituent elements without departing from the scope of the present invention defined in the claims, and the above embodiment and modifications may be appropriately combined with each other. For example, the shapes of the movable member 40 shown in Figs. 2 and 4 may be combined, and the movable member 40 in which the plurality of straight protrusion parts 43 are disposed in a zigzag manner on the upper side and the lower side of the main body part 41 may be used.

According to the vibration-proof device of the present invention, the inclined protrusion part is formed on the outer circumferential edge portion of the movable member, and the radial width of the root part of the inclined protrusion part is smaller than the length in the axial direction from the root part to a distal end portion of the inclined protrusion part. Therefore, when the vibration is input to the vibration-proof device and the inclined protrusion part abuts the wall surface of the accommodation chamber, vibration energy can be absorbed, while greatly shearing and deforming the inclined protrusion part. Therefore, for example, as compared with the case in which the movable member is compressively deformed to absorb the vibration energy, the amount of deformation of the movable member and the time required until the deformation is completed increase, and the abrupt rise of the reaction force accompanying the deformation of the movable member is suppressed, and the cushioning effect due to deformation of the movable member can be strengthened. This makes it difficult for the vibration-proof device to vibrate when the movable member abuts the wall surface of the accommodation chamber, thereby limiting the occurrence of abnormal noise.

Here, the straight protrusion part protruding in the axial direction may be formed in a portion of the movable member located on the radially inner side of the inclined protrusion part.

In this case, since the entire inclined protrusion parts including not only the inclined protrusion part formed on the outer circumferential edge portion of the movable member but also the straight protrusion part formed on the inner side in the radial direction thereof abut on the wall surface of the accommodation chamber, it is possible to limit occurrence of abnormal noise and degradation of durability of the movable member due to a local occurrence of a large reaction force in the movable member.

In addition, for example, as compared with a case in which the inclined protrusion part is formed on the inner side in the radial direction, it becomes easy to release the molding die when the movable member is molded by the molding die, and the movable member can be easily molded.

In addition, the positions in the axial direction of the distal end portion of the inclined protrusion part and the distal end portion of the straight protrusion part may be equal to each other.

In this case, by making the gap between the inclined protrusion part, and the straight protrusion part and the wall surface of the accommodation chamber uniform, the whole of the distal end portion of the inclined protrusion part and the distal end portion of the straight protrusion part are easy to uniformly abut on the wall surface of the accommodation chamber, and it is possible to more reliably limit the occurrence of abnormal noises and degradation of the durability of the movable member due to occurrence of locally large reaction forces on the movable member.

Further, by uniformly reducing the gap between the inclined protrusion part, and the straight protrusion part and the wall surface of the accommodation chamber, the movable member is hard to accelerate in the accommodation chamber, and by limiting the speed when the inclined protrusion part and the straight protrusion part abut on the wall surface of the accommodation chamber, it is possible to more reliably limit the occurrence of abnormal noise.

In addition, a fixed part fixed to the partition member may be formed in a portion of the movable member located on the radially inner side of the outer circumferential edge portion.

In this case, since the fixed part of the movable member is fixed to the partition member on the inner side in the radial direction, by causing the inclined protrusion part formed on the outer circumferential edge portion of the movable member to more reliably abut on the wall surface of the accommodation chamber, it is possible to more reliably achieve improvement of the cushioning effect by absorbing the vibration energy by shearing deformation of the inclined protrusion parts.

### [Industrial Applicability]

The present invention provides a vibration-proof device capable of limiting abnormal noises occurring when the movable member abuts the wall surface of the accommodation chamber when the vibration is input from the vibration generation part.

### [Reference Signs List]

10 Vibration-proof device
11 First attaching member
12 Second attaching member
13 Elastic body
15d Second communication hole
16 Liquid chamber
16a Main liquid chamber
16b Auxiliary fluid chamber
18 Accommodation chamber
19a First communication hole
20 Partition member
24 Fixing end portion
40 Movable member
42 Inclined protrusion part
43 Straight protrusion part
44 Inner fixed part
45 Outer fixed part
L liquid
O Central axis

## Claims

1. A vibration-proof device (10) comprising:
a tubular first attaching member (11) connected to one of a vibration generation part and a vibration reception part, and a second attaching member (12) connected to the other thereof;
an elastic body (13) configured to connect both the attaching members (11, 12) to each other;
a partition member (20) configured to divide a liquid chamber (16) in the first attaching member (11) in which liquid is sealed into a main liquid chamber (16a) having the elastic body (13) as a part of a wall surface, and an auxiliary liquid chamber (16b); and
a movable member (40) accommodated in an accommodation chamber (18) provided in the partition member (20) so as to be deformable or displaceable in an axial direction of the first attaching member (11),
wherein the partition member (20) is provided with a plurality of communication holes (19a, 15d) through which the accommodation chamber (18) individually communicates with the main liquid chamber (16a) and the auxiliary liquid chamber (16b),
an inclined protrusion part (42) protruding in a direction inclined with respect to both the axial direction along a central axis (O) and a radial direction of the first attaching member (11) is formed on at least an outer circumferential edge portion of the movable member (40), and
a width (W) in the radial direction of a root part of the inclined protrusion part (42) is smaller than a length (H) in the axial direction from the root part to a distal end portion of the inclined protrusion part (42), **characterized in that**
a straight protrusion part (43) protruding in the axial direction is formed in a portion of the movable member (40) located on an inner side in the radial direction of the inclined protrusion part (42).

2. The vibration-proof device (10) according to claim 1, wherein positions in the axial direction of the distal end portion of the inclined protrusion part (42) and a distal end portion of the straight protrusion part (43) are equal to each other.

3. The vibration-proof device according to claim 1 or 2, wherein a fixed part (44, 45) to be fixed to the partition member (20) is formed in a portion of the movable member (40) located on an inner side in the radial direction of the outer circumferential edge portion.

4. The vibration-proof device (10) according to any one of claims 1 to 3, wherein the inclined protrusion part (42) is annularly formed along the entire circumference of the outer circumferential edge portion of the movable member (40).

5. The vibration-proof device (10) according to any one of claims 1 to 4, wherein the straight protrusion part (43) is formed in an annular shape coaxial with the central axis (O).

6. The vibration-proof device (10) according to any one of claims 1 to 5, wherein the width of the straight protrusion part (43) in the radial direction gradually decreases toward the distal end.

7. The vibration-proof device (10) according to any one of claims 1 to 6, wherein a volume of the inclined protrusion part (42) is formed to be smaller than a volume of the straight protrusion part (43) in the longitudinal sectional view.

8. The vibration-proof device (10) according to any one of claims 1 to 7, wherein a gap between the inclined protrusion part (42), the straight projection part (43) and the wall surface of the accommodation chamber (18) is uniformly reduced.

9. The vibration-proof device (10) according to any one of claims 3 to 8, wherein as the positions at which each of the inclined protrusion part (42) and straight projection part (43) is formed are away from the fixed parts (44, 45) in the radial direction, the height (H) of each of the inclined protrusion part (42) and straight projection part (43) gradually decreases.

10. The vibration-proof device (10) according to any one of claims 1 to 9, wherein a plurality of the straight protrusion parts (43) are provided,such that, when the vibration is input to the vibration-proof device (10), the inclined protrusion part (42) and the plurality of straight protrusion parts (43) abut on the wall surface of the accommodation chamber (18) as a whole.

## Patentansprüche

1. Vibrationsfeste Vorrichtung (10), die Folgendes umfasst:
ein röhrenförmiges erstes Befestigungselement (11), das mit einem von einem Vibrationserzeugungsteil und einem Vibrationsaufnahmeteil verbunden ist, und ein zweites Befestigungselement (12), das mit dem anderen derselben verbunden ist,
einen elastischen Körper (13), der dafür konfiguriert ist, die beiden Befestigungselemente (11, 12) miteinander zu verbinden,
ein Unterteilungselement (20), das dafür konfiguriert ist, eine Flüssigkeitskammer (16) in dem ersten Befestigungselement (11), in der Flüssigkeit eingeschlossen ist, in eine Hauptflüssigkeitskammer (16a), die den elastischen Körper (13) als einen Teil einer Wandfläche aufweist, und eine Nebenflüssigkeitskammer (16b) zu teilen, und
ein bewegliches Element (40), das so in einer Aufnahmekammer (18), die in dem Unterteilungselement (20) bereitgestellt wird, aufgenommen ist, dass es in einer axialen Richtung des ersten Befestigungselements (11) verformbar oder verschiebbar ist,
wobei das Unterteilungselement (20) mit einer Vielzahl von Verbindungslöchern (19a, 15d) versehen ist, durch welche die Aufnahmekammer (18) einzeln mit der Hauptflüssigkeitskammer (16a) und der Nebenflüssigkeitskammer (16b) in Verbindung steht,
ein geneigter Vorsprungsteil (42), der in einer Richtung vorspringt, die in Bezug auf sowohl die axiale Richtung entlang einer Mittelachse (O) als auch eine radiale Richtung des ersten Befestigungselements (11) geneigt ist, an mindestens einem äußeren Umfangskantenabschnitt des beweglichen Elements (40) geformt ist; und
eine Breite (W) in der radialen Richtung eines Fußteils des geneigten Vorsprungsteils (42) kleiner ist als eine Länge (H) in der axialen Richtung von dem Fußteil bis zu einem distalen Endabschnitt des geneigten Vorsprungsteils (42), **dadurch gekennzeichnet, dass**
ein gerader Vorsprungsteil (43), der in der axialen Richtung vorspringt, in einem Abschnitt des beweglichen Elements (40) geformt ist, der sich auf einer in der radialen Richtung inneren Seite des geneigten Vorsprungsteils (42) befindet.

2. Vibrationsfeste Vorrichtung (10) nach Anspruch 1, wobei Positionen in der axialen Richtung des distalen Endabschnitts des geneigten Vorsprungsteils (42) und eines distalen Endabschnitts des geraden Vorsprungsteils (43) zueinander gleich sind.

3. Vibrationsfeste Vorrichtung nach Anspruch 1 oder 2, wobei ein fester Teil (44, 45), der an dem Unterteilungselement (20) zu befestigen ist, in einem Abschnitt des beweglichen Elements (40) geformt ist, der sich auf einer in der radialen Richtung inneren Seite des äußeren Umfangskantenabschnitts befindet.

4. Vibrationsfeste Vorrichtung (10) nach einem der Ansprüche 1 bis 3, wobei der geneigte Vorsprungsteil (42) ringförmig entlang des gesamten Umfangs des äußeren Umfangskantenabschnitts des beweglichen Elements (40) geformt ist.

5. Vibrationsfeste Vorrichtung (10) nach einem der Ansprüche 1 bis 4, wobei der gerade Vorsprungsteil (43) in einer ringförmigen Gestalt koaxial mit der Mittelachse (O) geformt ist.

6. Vibrationsfeste Vorrichtung (10) nach einem der Ansprüche 1 bis 5, wobei die Breite des geraden Vorsprungsteils (43) in der radialen Richtung allmählich zu dem distalen Ende hin abnimmt.

7. Vibrationsfeste Vorrichtung (10) nach einem der Ansprüche 1 bis 6, wobei ein Volumen des geneigten Vorsprungsteils (42) so geformt ist, dass es kleiner ist als ein Volumen des geraden Vorsprungsteils (43) in der Längsschnittansicht.

8. Vibrationsfeste Vorrichtung (10) nach einem der Ansprüche 1 bis 7, wobei ein Spalt zwischen dem geneigten Vorsprungsteil (42), dem geraden Vorsprungsteil (43) und der Wandfläche der Aufnahmekammer (18) gleichmäßig verringert ist.

9. Vibrationsfeste Vorrichtung (10) nach einem der Ansprüche 3 bis 8, wobei, da sich die Positionen, an denen jeder des geneigten Vorsprungsteils (42) und des geraden Vorsprungsteils (43) geformt ist, in der radialen Richtung von den festen Teilen (44, 45) entfernt sind, die Höhe (H) jedes des geneigten Vorsprungsteils (42) und des geraden Vorsprungsteils (43) allmählich abnimmt.

10. Vibrationsfeste Vorrichtung (10) nach einem der Ansprüche 1 bis 9, wobei eine Vielzahl der geraden Vorsprungsteile (43) bereitgestellt wird, so dass, wenn die Vibration auf die vibrationsfeste Vorrichtung (10) angewendet wird, der geneigte Vorsprungsteil (42) und die Vielzahl von geraden Vorsprungsteilen (43) an die Wandfläche der Aufnahmekammer (18) als ein Ganzes anstoßen.

## Revendications

1. Dispositif anti-vibrations (10), comprenant :
un premier élément de fixation tubulaire (11) connecté à l'une d'une partie de génération de vibrations et d'une partie de réception de vibrations, et un deuxième élément de fixation (12) connecté à l'autre de celles-ci ;
un corps élastique (13) configuré pour connecter les deux éléments de fixation (11, 12) l'un à l'autre;
un élément de séparation (20) configuré pour diviser une chambre de liquide (16) dans le premier élément de fixation (11), dans laquelle le liquide est scellé dans une chambre de liquide principale (16a) comportant le corps élastique (13) en tant que partie de d'une surface de paroi, et une chambre de liquide auxiliaire (16b) ; et
un élément mobile (40) logé dans une chambre de logement (18) fournie dans l'élément de séparation (20) de sorte à pouvoir être déformé ou déplacé dans une direction axiale du premier élément de fixation (11) ;
dans lequel l'élément de séparation (20) est doté d'une pluralité de trous de communication (19a, 15d) à travers lesquels la chambre de logement (18) communique individuellement avec la chambre de liquide principale (16a) et la chambre de liquide auxiliaire (16b) ;
une partie saillante inclinée (42), faisant saillie dans une direction inclinée à la fois par rapport à la direction axiale le long d'un axe central (O) et à une direction radiale du premier élément de fixation (11), est formée sur au moins une section de bordure circonférentielle de l'élément mobile (40) ; et
une largeur (W) dans la direction radiale d'une partie de racine de la partie saillante inclinée (42) est inférieure à une longueur (H) dans la direction axiale, de la partie de racine vers une section d'extrémité distale de la partie saillante inclinée (42), **caractérisé en ce que** :
une partie saillante droite (43) faisant saillie dans la direction axiale est formée dans une section de l'élément mobile (40), située sur un côté interne dans la direction axiale de la partie saillante inclinée (42).

2. Dispositif anti-vibrations (10) selon la revendication 1, dans lequel des positions, dans la direction axiale de la section d'extrémité distale, de la partie saillante inclinée (42) et d'une section d'extrémité de la partie saillante droite (43) sont égales l'une à l'autre.

3. Dispositif anti-vibrations selon les revendications 1 ou 2, dans lequel une partie fixe (44, 45) destinée à être fixée sur l'élément de séparation (20) est formée dans une section de l'élément mobile (40) située sur un côté interne, dans la direction radiale de la section de bordure circonférentielle externe.

4. Dispositif anti-vibrations (10) selon l'une quelconque des revendications 1 à 3, dans lequel la partie saillante inclinée (42) est formée de manière annulaire le long de l'ensemble de la circonférence de la section de bordure circonférentielle externe de l'élément mobile (40).

5. Dispositif anti-vibrations (10) selon l'une quelconque des revendications 1 à 4, dans lequel la partie saillante droite (43) est formée en une forme annulaire coaxiale à l'axe central (O).

6. Dispositif anti-vibrations (10) selon l'une quelconque des revendications 1 à 5, dans lequel la largeur de la partie saillante droite (43) dans la direction radiale diminue progressivement vers l'extrémité distale.

7. Dispositif anti-vibrations (10) selon l'une quelconque des revendications 1 à 6, dans lequel un volume de la partie saillante inclinée (42) est formé de sorte à être inférieur à un volume de la partie saillante droite (43) dans la vue en coupe longitudinale.

8. Dispositif anti-vibrations (10) selon l'une quelconque des revendications 1 à 7, dans lequel un espace entre la partie saillante inclinée (42), la partie saillante droite (43) et la surface de paroi de la chambre de logement (18) est réduit de manière uniforme.

9. Dispositif anti-vibrations (10) selon l'une quelconque des revendications 3 à 8, dans lequel, comme les positions au niveau desquelles chacune de la partie saillante inclinée (42) et de la partie saillante droite (43) est formée, sont écartées des parties fixes (44, 45) dans la direction radiale, la hauteur (H) de chacune de la partie saillante inclinée (42) et de la partie saillante droite (43) diminue progressivement.

10. Dispositif anti-vibrations (10) selon l'une quelconque des revendications 1 à 9, dans lequel une pluralité de parties saillantes droites (43) sont fournies, de sorte que, lorsque la vibration est appliquée au dispositif anti-vibrations (10), la partie saillante inclinée (42) et la pluralité de parties saillantes droites (43) butent contre la surface de paroi de la chambre de logement (18) en tant qu'ensemble.
